# EUROPEAN PATENT SPECIFICATION

(11) **EP 0 673 805 B1**
(45) Date of publication and mention of the grant of the patent: **23.09.1998**
(21) Application number: 95301046.9
(22) Date of filing: 17.02.1995
(51) Int. Cl.: B60R 16/02, B60T 8/36

(54) **Integrated unit assembly for antilock brake system**
Integrierte Einheit für Antiblockierbremssystem
Assemblage d'unités intégrées pour un système de freinage antiblocage

(30) Priority: 23.03.1994 JP 52082/94
(43) Date of publication of application: 27.09.1995
(73) Proprietor: SUMITOMO WIRING SYSTEMS, Ltd., Yokkaichi-shi, Mie-ken 510 (JP); SUMITOMO ELECTRIC INDUSTRIES, LTD., Osaka-shi, Osaka 541 (JP)
(72) Inventor: Hashiba, Hitoshi, c/o Sumitomo Electric Ind. Ltd., Osaka-shi, Osaka (JP); Ueda, Seiji, c/o Sumitomo Electric Ind. Ltd., Osaka-shi, Osaka (JP); Wada, Itaru, c/o Sumitomo Electric Ind. Ltd., Osaka-shi, Osaka (JP); Nozaki, Takao, c/o Sumitomo Wiring Systems, Ltd., Yokkaichi-shi, Mie-ken (JP); Hio, Masahide, c/o Sumitomo Wiring Systems, Ltd., Yokkaichi-shi, Mie-ken (JP)
(74) Representative: Spall, Christopher John

(56) References cited:
- EP-A- 0 519 736
- WO-A-89/10286
- WO-A-93/08050
- DE-A- 4 225 358
- DE-U- 8 910 805
- KRAFTHAND, vol.66, no.20, 23 October 1993, BAD WORISHOFEN, DE pages 1618 - 1619, XP403351 TEVES 'NEUES ABS VON TEVES'

## Description

This invention relates to an integrated unit assembly for an antilock brake system (ABS) having a hydraulic power unit and an electronic control unit and more particularly to an integrated unit assembly which is convenient for mounting an ABS in an automobile, and enables low cost production and attachment. The ABS described hereinafter includes a traction control system (TCS).

A recent ABS has been generally used which comprises rotation detectors for detecting a rotation state of each wheel of an automobile, an electronic control unit for deciding a wheel-locking tendency and a lock-recovering tendency to generate a control command signal which pressurizes brake liquid in a wheel cylinder of each wheel so as to maintain an antilock brake state in accordance with the signals from the rotation detectors, a hydraulic power unit including solenoid valves which open and close liquid passages between a motor-driven pump and the wheel cylinder of each wheel and between the wheel cylinder and a reservoir in response to command signals from the pump and electronic control unit, and a fail safe relay, a motor relay and the like for an electrical circuit.

In a conventional ABS, the hydraulic power unit and relays are disposed in an engine compartment while the electronic control unit is disposed in a vehicle interior, for example, a space under a seat or a front panel. That is, the hydraulic power unit, relays and electronic control unit are separately disposed in different positions, respectively.

The conventional ABS requires long wire harnesses which electrically connect the hydraulic power unit, relays and electronic control unit to each other. Consequently, the wire harnesses cause an increase in costs, in the weight of an automobile, and in the complexity of wiring. It is also necessary to provide the units and relays with brackets which attach them to a car body. This also increases the cost, car weight, and working steps.

An integrated unit assembly for an anti-lock brake system is known from Krafthand, vol. 66, no. 20 (published on 23rd October 1993). This document discloses a unit in which the solenoid cores of the hydraulic unit are brought into contact with high permeability members which each enclose one coil to define a magnetic circuit. A magnet wire for each coil must be soldered to the circuit board which is difficult to perform and requires several operation steps. Furthermore, a failure in the contacts will produce a fault. Heat built up within the unit can also cause potential problems as it cannot easily be dissipated from the electronic circuit. The disclosure of this document has been used as the basis for the precharacterising portion of the claims.

An object of the present invention is to provide an integrated unit assembly for an antilock brake system, which can eliminate electrical connection through wire harnesses, achieve low protection costs and a light weight of the ABS, and reduce the number of assembly steps.

In order to achieve the above object, an integrated unit assembly for antilock brake system in accordance with the present invention, comprises: an electronic control unit for deciding a wheel-locking tendency and a lock-recovering tendency to generate a control command signal for a brake liquid pressure in a wheel cylinder of each wheel of an automobile in accordance with a rotation state signal from each rotation detector, said electronic control unit including upright solenoid sockets adapted to transmit a liquid pressure signal to upper elements;
a hydraulic power unit including solenoid valves and solenoid terminals connected to coils of said solenoid valves and projecting downwardly, said solenoid valves being adapted to open and close liquid passages between a motor-driven pump and said wheel cylinder of each wheel and between said wheel cylinder and a buffer chamber in response to command signals from said pump and said electronic control unit; and means for mechanically coupling said electronic control unit to a rear side of said hydraulic power unit by inserting said solenoid terminals into said solenoid sockets, respectively, characterised in that said electronic control unit includes an accommodating casing assembly having a good heat conductive character, a lower casing with a bottom wall and side walls and an upper casing which closes an upper opening of said lower casing, and a mounting base plate, to which control circuit elements are attached, wherein a heat radiation plate is attached to said mounting base plate so as to radiate heat from high heat radiation parts on the mounting base plate, and said heat radiation plate is coupled to said accommodating casing assembly through a coupling element made of a good heat conductive material so that said mounting base plate is coupled to said accommodating casing assembly.

In the case that the electronic control unit includes a motor control circuit for the hydraulic power unit, the control circuit and motor are interconnected through the motor terminals and motor socket. The socket is a female connector.

It is preferable to adapt a construction specified in an embodiment mentioned hereinafter as means for mechanically uniting the hydraulic power unit and electronic control unit, a preferred construction of the electronic control unit and the like. In that embodiment, relays are put on a mounting base plate of the electronic control unit and disposed adjacent the hydraulic power unit. Thus, wire harnesses for connecting the relays are not used.

Preferably, a waterproof packing provided with a slot for guiding liquid leaked from a buffer chamber in the hydraulic power unit is coupled between the hydraulic power unit and the electronic control unit. The hydraulic power unit of a so-called cyclic type of antilock brake system is provided in a liquid draining passage from a wheel cylinder or a way to a pump suction circuit with a buffer chamber which temporarily receives liquid drained from a wheel cylinder. The buffer chamber includes a piston of a displacement of which causes a change of volume for liquid. In this type of buffer chamber, even a very small amount of liquid leaks through a clearance between the outer periphery of the piston and the inner periphery of the buffer chamber. Besides, outlet part of buffer chambers must be in atmosphere at 1 atm in terms of adequate moving of piston in buffer chambers. The leaked liquid flows out of an outlet port in a lower portion of the unit. The waterproof packing described above can prevent the liquid from entering into the electronic control unit even if the electronic control unit is disposed on the underside of the hydraulic power unit, and can keep adequate moving of the piston in buffer chambers.

The integrated unit assembly of the present invention requires no wire harness since two or three of the hydraulic power unit, electronic control unit and relays are united together.

Only one bracket can attach the assembly to a car body, thereby realizing a low production cost, a light weight of the ABS, and reduction of assembling processes.

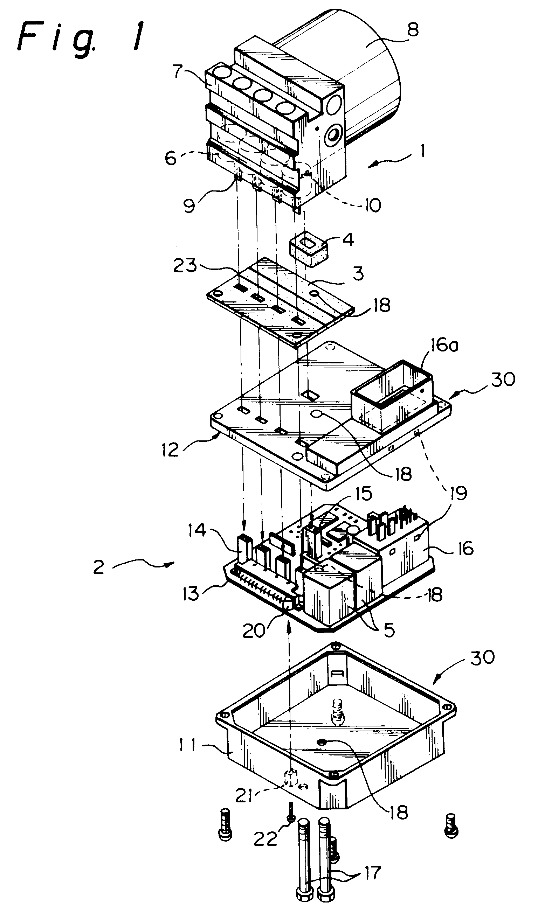

FIG. 1 is an exploded perspective view of an embodiment of an integrated units for an ABS in accordance with the present invention.

FIG. 1 shows an embodiment of an integrated unit assembly for an antilock brake system (ABS) in accordance with the present invention.

The integrated unit assembly includes a hydraulic power unit 1, an electronic control unit 2, waterproof packings 3 and 4 to be clamped between both units 1 and 2, and fail safe and motor relays 5.

The hydraulic power unit 1 includes a body portion 7, a motor for driving a pump, solenoid terminals 9 connected to solenoid coils 6 and projecting downwardly from the body portion 7, and motor terminals 10 connected to a supply power brush (not shown) of a motor 8 and projecting downwardly in the same manner as the terminals 9. The body portion 7 contains a pump, solenoid valves, a buffer chamber, a silencer for absorbing pulses of pressure from the pump, and flow control valves for controlling a supply amount of liquid to wheel cylinders. The body portion 7 also includes outlet ports for coupling flow control valves and wheel cylinders for the respective wheels, inlet ports for coupling between outlets of pumps, inlets of flow control valves inside the hydraulic unit and master cylinder outside the hydraulic unit, liquid passages for connecting the wheel cylinders to the buffer chamber through the flow control valves and solenoid valves, and liquid passages for connecting the former liquid passages to an inlet port of the pump (only coils 6 of the solenoid valves are illustrated in the drawings).

On the other hand, the electronic control unit 2 includes an accommodating casing assembly 30 having a lower casing 11 provided with a bottom wall and side walls and an upper casing 12 which closes an upper opening of the lower casing 11, a mounting base plate 13 to which control circuit elements are attached, solenoid sockets 14 attached to the base plate 13 in opposition to the solenoid terminals 9, a motor socket 15 attached to the base plate 13 in opposition to the motor terminals 10, a waterproof male connector 16 attached to the base plate 13, and a housing 16a for the connector 16.

The mounting base plate 13 is accommodated in the upon casing 12 so that the upper portions of the sockets 14 and 15 pass through holes in the upper casing 12.

The waterproof male connector 16 has housing molded resin and terminals projecting from the molded resin, and is surrounded by connector sleeve which is part of upper housing.

Moreover, since the interior of the accommodating casing assembly 30 is increased by inflating the upper casing 12 upwardly, the relays 5 put on the mounting base plate 13 can be accommodated in the assembly 30. An entire height of the integrated unit assembly does not become large and a whole space of the assembly becomes small, because the relays are arranged adjacent the hydraulic power unit 1. The wire harnesses can be eliminated between the relays 5 and the electronic control unit 2 and reduction of cost and weight can be achieved.

Bolt holes 18 are formed in the lower casing 11, mounting base plate 13, upper casing 12, and waterproof packings 3 and 4 so that fastening bolts 17 can pass through them. The fastening bolts 17 serve to mechanically interconnect the hydraulic power unit 1 and electronic control unit 2 and to arrange the respective elements in position. In other words, after the bolts 17 pass through the lower casing 11 from its rear side, the mounting base plate 13, upper casing 12, and waterproof packings 3 and 4 are received on the bolts 17 in order. Finally, the distal ends of the bolts 17 are screwed into threaded holes in the lower portion of the hydraulic power unit 1. Thus, assembly work becomes easy and precise.

One of two sets of bolt holes 18 shown in the drawing and formed in the lower and upper casings 11 and 12, base plate 13, and packings 3 and 4 and one of threaded holes in the hydraulic power unit 1 become a reference of position for the other set of bolt holes, threaded holes, insertion holes in the terminals 9 and 10, sockets 14 and 15, upper casing 12, solenoid valves, and the like. This reference of position makes it precise to couple or fit the respective elements and makes it easy to construct the integrated unit assembly of the present invention.

The solenoid terminals 9 and motor terminals 10 are inserted into the corresponding sockets 14 and 15 upon securing the bolt 17 into the hydraulic power unit 1, thereby finishing mechanical and electrical connections between the units 1 and 2.

The following devices are also applied to the construction illustrated in the drawing. One of them is a lock mechanism 19 (projections and apertures in the drawing) which serves to interconnect the molded resin of the waterproof male connector 16 and the housing 16a on the upper casing 12. The lock mechanism 19 can enhance stability of the connector 16 on the upper casing 12 and moderate a stress to be applied to soldered portions on the male terminals on the mounting base plate when a waterproof female system connector from an electrical circuit on the car body is fitted to the waterproof male connector 16. Accordingly, it is possible to prevent the soldered portions on the male terminals from disconnecting from the respective elements, thereby preventing failure of conduction.

A second device is to provide on the upper casing 12 the housing 16a which is joined to the molded resin for the male terminals. In the case that the housing 16a is disposed on the base plate 13 in the same manner as the waterproof male connector 16, it is necessary to provide in the upper casing 12 with an aperture through which the housing 16a passes. Consequently, a waterproof packing which seals a clearance between the aperture and the housing. This makes the device complicated. Such waterproof packing cannot be expected to effect positive waterproofing. On the contrary, the illustrated construction of the present invention can prevent water from entering into the casing assembly 30 by means of the housing 16a joined together to the upper casing 12. Thus, it is possible to enhance simplification of the construction and reliability of waterproofing.

A third device resides in that the accommodating casing assembly is made of aluminium having a light weight and good heat conductive character, that a heat radiation plate 20 is attached to the mounting base plate so as to radiate heat from high heat radiation parts on the base plate 13, and that the heat radiation plate 20 is coupled to the upper casing 11 through a coupling element made of a good heat conductive material so as to couple the mounting base plate 13 to the lower casing 11. Preferably, the heat from the high heat radiation parts is transmitted through screws 22, mounts 21, and the radiation plate 20 to the assembly 30.

It is important to provide heat radiation means in an engine compartment in the case of arranging the electronic control unit in the engine compartment, due to the high temperatures therein. In this respect, the above construction in which a heat transmitting path is disposed directly between the high heat radiation parts and the aluminium casing will be very effective.

Further, the heat radiation plate 20 is secured to the mounting base plate 13 by another screws (not shown) except the screws 22. Another parts are also secured to the another screws. That is, the heat radiation plate 20 and other parts are secured to the mounting base plate 13 by the common screws, thereby decreasing the number of parts and reducing costs and assembling processes.

Preferably, the waterproof packing 3 is provided with slots 23 which serve to drain the leaked liquid. The slots 23 are arranged in the packing 3 under the lower portion of the buffer chamber in the hydraulic power unit so that the slots 23 receive the liquid leaked from the outlet port in the buffer chamber and drain the leaked liquid onto the outer periphery of the accommodating casing assembly to effect adequate moving of piston in buffer chambers. Accordingly, it is possible to prevent the leaked liquid from entering into the casing assembly and to prevent any failure from being caused in the control circuit in the casing assembly due to the entrance of liquid.

The mounting base plate 13 is provided with bus bar wirings to which a contact circuit for the relays adapted to flow a large current is connected. A copper foil circuit formed on the mounting base plate cannot allow a great correct to flow therein. Accordingly, the relays 5 are not generally put on the mounting base plate 13. However, an addition of bus bar wirings can permit the mounting base plate to support the relays 5, thereby eliminating the wire harnesses between the relays and the electronic control unit.

As described above, it is possible in accordance with the present invention to eliminate long wire harnesses between the units and between the units and the relays, protectors for the wire harnesses, and waterproof connectors for the wire harnesses, as required in the prior art, it is sufficient to provide only a single unit for the automobile and a single bracket for the relays, and it is possible to reduce a cost and a weight of the ABS and to simplify an assembling work of the ABS onto the car body, since the hydraulic power unit and the electronic control unit are joined together and preferably they are joined to the relays together through connectors although they are separately disposed in the car body in the prior art.

## Claims

1. An integrated unit assembly for an antilock brake system, comprising:
an electronic control unit (2) for deciding a wheel-locking tendency and a lock-recovering tendency to generate a control command signal for a brake liquid pressure in a wheel cylinder of each wheel of an automobile in accordance with a rotation state signal from each rotation detector, said electronic control unit (2) including upright solenoid sockets (14) adapted to transmit a liquid pressure signal to upper elements;
a hydraulic power unit (1) including solenoid valves and solenoid terminals (9) connected to coils (6) of said solenoid valves and projecting downwardly, said solenoid valves being adapted to open and close liquid passages between a motor-driven pump and said wheel cylinder of each wheel and between said wheel cylinder and a buffer chamber in response to command signals from said pump and said electronic control unit; and means for mechanically coupling said electronic control unit (2) to a rear side of said hydraulic power unit (1) by inserting said solenoid terminals (9) into said solenoid sockets (14), respectively, characterised in that said electronic control unit (2) includes an accommodating casing assembly (30) having a good heat conductive character, a lower casing (11) with a bottom wall and side walls and an upper casing (12) which closes an upper opening of said lower casing (11), and a mounting base plate (13), to which control circuit elements are attached, wherein a heat radiation plate (20) is attached to said mounting base plate (13) so as to radiate heat from high heat radiation parts on the mounting base plate (13), and said heat radiation plate (20) is coupled to said accommodating casing assembly (30) through a coupling element made of a good heat conductive material so that said mounting base plate (13) is coupled to said accommodating casing assembly (30).

2. An integrated unit assembly for an antilock brake system according to claim 1 wherein said heat radiation plate (20) is secured to said mounting base plate (13) by screws (22), and wherein said screws serve to secure other parts of said base plate (13).

3. An integrated unit assembly for an antilock brake system according to claim 1, wherein said electronic control unit (2) includes a motor control circuit and a motor socket (15) which connects said motor control circuit to a motor (8), and wherein said hydraulic power unit (1) includes motor terminals (10) which project downwardly to be connected to said motor socket (15) so as to be coupled to supplying power brushes of the motor (8).

4. An integrated unit assembly according to any preceding claim in which said accommodating casing assembly is made of aluminium.

5. An integrated unit assembly for an antilock brake system according to any preceding claim, wherein said mechanically coupling means include a plurality of fastening bolts (17) which are inserted through said electronic control unit (2) from the lower side into threaded holes in a lower wall of said hydraulic power unit (1) to position both units (1,2) with respect to each other.

6. An integrated unit assembly for an antilock brake system according to claim 1 wherein said accommodating casing assembly (30) is provided in its interior with an accommodating space which stands up adjacent to a side of said hydraulic power unit (1), and wherein a fail safe relay (5) and a motor relay (5) which constitute said antilock system are attached to said mounting base plate (13) to dispose said relays (5) in said accommodating space.

7. An integrated unit assembly for an antilock brake system according to any preceding claim, wherein said mounting base plate (13) is provided on its face with bus bar wirings which constitute contact circuits of said relays (5).

8. An integrated unit assembly for an antilock brake system according to any preceding claim, wherein said mounting base plate (13) is provided on its face with a waterproof male connector (16) which is fitted to a system waterproof female connector on a vehicle side electrical circuit at a side of said hydraulic power unit (1), wherein said upper casing (12) is provided with a connector housing which stands up on said upper casing and encloses a molded resin of said waterproof male connector (16) and male terminals projecting from the molded resin, and wherein lock means (19) are provided on said molded resin and said upper casing (12) to interconnect them.

9. An integrated unit assembly for an antilock brake system according to any preceding claim wherein a waterproof packing (3) is disposed between said hydraulic power unit (1) and said electronic control unit (2), and wherein said waterproof packing (3) is provided with slots (23) for leaking liquid at a leaking liquid outlet port in said buffer chamber in said hydraulic power unit (1).

## Patentansprüche

1. Ein integrierter Einheitssatz für ein Antiblockier-Bremssystem, umfassend:
eine elektronische Steuereinheit (2) zum Entscheiden einer Radblockiertendenz und einer Blockierauflösetendenz, um ein Steuerungsbefehlssignal für einen Bremsflüssigkeitsdruck in einem Radzylinder jedes Rads eines Automobils in Übereinstimmung mit einem Rotationszustandssignal von jedem Rotationsdetektor zu erzeugen, wobei die elektronische Steuereinheit (2) aufrechte Magnetventilbuchsen (14) beinhaltet, die ausgebildet sind, um ein Flüssigkeitsdrucksignal zu oberen Elementen zu übertragen;
eine hydraulische Leistungseinheit (1) mit Magnetventilen und Magentventilanschlüssen (9), die mit Spulen (6) der Magnetventile verbunden sind und nach unten vorspringen, wobei die Magnetventile ausgebildet sind, um Flüssigkeitsdurchlässe zwischen einer motorgetriebenen Pumpe und dem Radzylinder jedes Rads und zwischen dem Radzylinder und einer Speicherkammer in Abhängigkeit von Befehlssignalen von der Pumpe und der elektronischen Steuereinheit zu öffnen und zu schließen; und
eine Einrichtung zum mechanischen Koppeln der elektronischen Steuereinheit (2) mit einer Hinterseite der hydraulischen Leistungseinheit (1) durch Einführen der Magnetventilanschlüsse (9) in die jeweiligen Magnetventilbuchsen (14), **dadurch gekennzeichnet, daß** die elektronische Steuereinheit (2) einen aufnehmenden Gehäusesatz (30) mit einer gut wärmeleitenden Eigenschaft, ein unteres Gehäuse (1) mit einer Unterwand und Seitenwänden und ein oberes Gehäuse (12), das eine obere Öffnung des unteren Gehäuses (11) schließt, und eine Befestigungsgrundplatte (13) umfaßt, an der Steuerkreiselemente befestigt sind, wobei eine Wärmestrahlungsplatte (20) an der Befestigungsgrundplatte (13) derart befestigt ist, daß Wärme von hochwärmestrahlenden Teilen an der Befestigungsgrundplatte (13) abgestrahlt wird, und die Wärmestrahlungsplatte (20) mit dem aufnehmenden Gehäusesatz (30) durch ein Koppelelement gekoppelt ist, das aus einem gut wärmeleitenden Werkstoff hergestellt ist, so daß die Befestigungsgrundplatte (13) mit dem aufnehmenden Gehäusesatz (30) gekoppelt ist.

2. Integrierter Einheitssatz für ein Antiblockier-Bremssystem nach Anspruch 1, wobei die Wärmestrahlungsplatte (20) an der Befestigungsgrundplatte (13) durch Schrauben (22) befestigt ist und wobei die Schrauben dazu dienen, weitere Teile der Grundplatte (13) zu befestigen.

3. Integrierter Einheitssatz für ein Antiblockier-Bremssystem nach Anspruch 1, wobei die elektronische Steuereinheit (2) einen Motorsteuerkreis und eine Motorbuchse (15) umfaßt, die den Motorsteuerkreis mit einem Motor (8) verbindet, und wobei die hydraulische Leistungseinheit (1) Motoranschlüsse (10) umfaßt, die nach unten vorspringen, um mit der Motorbuchse (15) derart verbunden zu werden, daß sie mit Versorgungsleistungsbürsten des Motors (8) gekoppelt sind.

4. Integrierter Einheitssatz für ein Antiblockier-Bremssystem nach mindestens einem der vorhergehenden Ansprüche, in dem der aufnehmende Gehäusesatz aus Aluminium hergestellt ist.

5. Integrierter Einheitssatz für ein Antiblockier-Bremssystem nach mindestens einem der vorhergehenden Ansprüche, wobei die mechanische Koppeleinrichtung eine Vielzahl von Befestigungsbolzen (17) umfaßt, die durch die elektronische Steuereinheit (2) von der unteren Seite in Gewindelöcher in einer unteren Wand der hydraulischen Leistungseinheit (1) eingeführt werden, um beide Einheiten (1, 2) relativ zueinander anzuordnen.

6. Integrierter Einheitssatz für ein Antiblockier-Bremssystem nach Anspruch 1, wobei der aufnehmende Gehäusesatz (30) auf seiner Innenseite mit einem Aufnahmeraum versehen ist, der benachbart zu einer Seite der hydraulischen Leistungseinheit (1) aufsteht, und wobei ein Failsafe-Relais (5) und ein Motorrelais (5), die das Antiblockiersystem bilden, an der Befestigungsgrundplatte (13) befestigt sind, um die Relais (5) in dem Aufnahmeraum anzuordnen.

7. Integrierter Einheitssatz für ein Antiblockier-Bremssystem nach mindestens einem der vorhergehenden Ansprüche, wobei die Befestigungsgrundplatte (13) auf ihrer Fläche mit Sammelschienenverkabelungen versehen ist, die Kontaktkreise der Relais (5) bildet.

8. Integrierter Einheitssatz für ein Antiblockier-Bremssystem nach mindestens einem der vorhergehenden Ansprüche, dadurch gekennzeichnet, daß die Befestigungsgrundplatte (13) auf ihrer Fläche mit einem wasserdichten männlichen Verbinder (16) versehen ist, der an einer Seite der hydraulischen Leistungseinheit (1) an einem wasserdichten weiblichen Systemverbinder auf einem fahrzeugseitigen elektrischen Kreis befestigt ist, wobei das obere Gehäuse (12) mit einem Verbindergehäuse versehen ist, das auf dem oberen Gehäuse aufsteht und einen geformten Harz des wasserdichten männlichen Verbinders (16) und männliche Anschlüsse einschließt, die von dem geformten Harz vorspringen, und wobei Verriegelungseinrichtungen (19) auf dem geformten Harz und dem oberen Gehäuse (12) vorgesehen sind, um diese miteinander zu verbinden.

9. Integrierter Einheitssatz für ein Antiblockier-Bremssystem nach mindestens einem der vorhergehenden Ansprüche, dadurch gekennzeichnet, daß eine wasserdichte Dichtung (3) zwischen der hydraulischen Leistungseinheit (1) und der elektronischen Steuereinheit (2) angeordnet ist, und dadurch, daß die wasserdichte Dichtung (3) mit Schlitzen (23) versehen ist, für Leckflüssigkeit an einer Leckflüssigkeitsauslaßöffnung in der Speicherkammer in der hydraulischen Leistungseinheit (1).

## Revendications

1. Sous-ensemble intégré pour un système anti-blocage de frein comprenant :
une unité de commande électronique (2) pour déceler une tendance de blocage de roue et une tendance de récupération de blocage pour produire un signal d'ordre de commande pour la pression d'un liquide de frein dans un cylindre de roue de chaque roue d'un véhicule automobile en fonction d'un signal d'état de rotation reçu de chaque détecteur de rotation, ladite unité (2) de commande électronique incluant des socles (14) de solénoïde dressés vers le haut et adaptés pour transmettre un signal de pression de liquide vers des éléments supérieurs ;
une unité (1) de puissance hydraulique comprenant des électrovannes et des bornes (9) de solénoïde raccordées à des bobines (6) desdites électrovannes et faisant saillie vers le bas, lesdites électrovannes étant adaptées pour ouvrir et fermer des passages de liquide situés entre une pompe entraînée par moteur et ledit cylindre de roue de chaque roue, et entre ledit cylindre de roue et une chambre tampon en réponse pour commander des signaux reçus de ladite pompe et de ladite unité de commande électronique ; et des moyens pour couper mécaniquement ladite unité (2) de commande électronique à une face arrière de ladite unité (1) de puissance hydraulique par une insertion desdites bornes de solénoïde dans lesdits socles (14) de solénoïde respectivement, caractérisé en ce que ladite unité (2) de commande électronique comprend un assemblage (30) de boîtier de logement ayant une bonne aptitude à la conduction thermique, un boîtier inférieur (11) avec une paroi de fond et des parois latérales et un boîtier supérieur (12) qui ferme une ouverture supérieure dudit boîtier inférieur (11), et une plaque (13) de base de montage à laquelle sont attachés des éléments de circuit de commande, une plaque (20) de rayonnement thermique étant attachée à ladite plaque (13) de base de montage afin de dissiper la chaleur produite par des parties à radiation thermique importante montées sur la plaque (13) de base de montage, et ladite plaque (20) de rayonnement thermique étant accouplée audit assemblage (30) de boîtier de logement par un élément de couplage réalisé en un matériau bon conducteur thermique de sorte que la plaque (13) de base de montage est couplée audit assemblage (30) de boîtier de logement.

2. Sous-ensemble intégré pour un système anti-blocage de frein selon la revendication 1, dans lequel ladite plaque (20) de rayonnement thermique est fixée à ladite plaque (13) de base de montage par des vis (22), et dans lequel lesdites vis servent à fixer d'autres parties de ladite plaque de base (13).

3. Sous-ensemble intégré pour un système anti-blocage de frein selon la revendication 1, dans lequel l'unité (2) de commande électronique comprend un circuit de commande de moteur et un socle (15) de moteur qui raccorde ledit circuit de commande de moteur à un moteur (8), et dans lequel ladite unité (1) de puissance hydraulique comprend des bornes de moteur (10) faisant saillie vers le bas pour être raccordées audit socle (15) de moteur de façon à être couplées à des brosses d'alimentation en puissance du moteur (8).

4. Sous-ensemble intégré selon l'une quelconque des revendications précédentes, dans lequel l'assemblage du boîtier de logement est réalisé en aluminium.

5. Sous-ensemble intégré pour un système antiblocage de frein selon l'une quelconque des revendications précédentes, dans lequel lesdits moyens de couplage mécanique comprennent une pluralité de boulons de fixation (17) qui sont insérés au travers de l'unité (2) de commande électronique, depuis sa face inférieure, dans des trous taraudés situés sur une paroi inférieure de ladite unité (1) de puissance hydraulique pour positionner les deux unités (1, 2), l'une par rapport à l'autre.

6. Sous-ensemble intégré pour un système anti-blocage de frein selon la revendication 1, dans lequel ledit assemblage (30) de boîtier de logement est fourni, dans son intérieur, avec un espace de logement qui est dressé vers le haut et adjacent à un côté de l'unité (1) de puissance hydraulique, et dans lequel un relais (5) à sûreté intégré et un relais (5) moteur qui constituent ledit système anti-blocage, sont attachés à ladite plaque (13) de base de montage pour disposer lesdits relais (5) dans ledit espace de logement.

7. Sous-ensemble intégré pour un système anti-blocage de frein selon l'une quelconque des revendications précédentes, dans lequel la plaque (13) de base de montage est fournie avec des conducteurs barre bus sur sa face, qui constituent des circuits de contact desdits relais (5).

8. Sous-ensemble intégré pour un système anti-blocage de frein selon l'une quelconque des revendications précédentes, dans lequel la plaque (13) de base de montage est fournie avec un connecteur (16) mâle sur sa face inférieure, étanche à l'eau qui est adapté à un connecteur femelle étanche à l'eau attaché à un circuit électrique latéral de véhicule à un côté de l'unité (1) de puissance hydraulique, dans lequel le boîtier (12) supérieur est fourni avec un boîtier de connexion qui est dressé vers le haut sur ledit boîtier supérieur et enferme une résine moulée dudit connecteur (16) mâle étanche à l'eau et des bornes mâles en saillie de la résine moulée, et dans lequel des moyens de blocage (19) sont fournis sur la résine moulée et ledit boîtier (12) supérieur pour les raccorder l'un à l'autre.

9. Sous-ensemble intégré pour un système anti-blocage de frein selon l'une quelconque des revendications précédentes, dans lequel un garnissage étanche à l'eau (3) est disposé entre l'unité (1) de puissance hydraulique et l'unité (2) de commande électronique, et dans lequel ledit garnissage (3) étanche à l'eau est fourni avec des fentes (23) pour un liquide de fuite au niveau d'un port de sortie du liquide de fuite dans ladite chambre tampon située dans l'unité de puissance hydraulique (1).
